Europäisches Patentamt

European Patent Office

Office européen des brevets

(19)

(11) Numéro de publication : **0 115 254**
**B1**

(12)

# FASCICULE DE BREVET EUROPÉEN

(45) Date de publication du fascicule du brevet :
**21.01.87**

(21) Numéro de dépôt : **83830013.5**

(22) Date de dépôt : **25.01.83**

(51) Int. Cl.⁴ : **B 60 T 15/48**, B 60 T 13/24,
B 60 T 17/18, F 15 B 1/02

(54) **Circuit de distribution d'un fluide sous dépression pour véhicule automobile.**

(43) Date de publication de la demande :
**08.08.84 Bulletin 84/32**

(45) Mention de la délivrance du brevet :
**21.01.87 Bulletin 87/04**

(84) Etats contractants désignés :
**DE FR GB IT SE**

(56) Documents cités :
**DE-A- 2 114 589**
**FR-A- 1 180 706**
**FR-A- 2 426 171**
**US-A- 2 911 264**
**US-A- 4 328 669**

(73) Titulaire : **BENDIX ITALIA S.p.A.**
**Via Cavalli 53 A Casella Postale 66**
**I-26013 Crema (IT)**

(72) Inventeur : **Cadeddù, Leonardo**
**Via Piacenza 29**
**I-26013 Crema (IT)**

(74) Mandataire : **Poidatz, Emmanuel et al**
**Service Brevets Bendix 44 rue François 1er**
**F-75008 Paris (FR)**

Jouve, 18, rue St-Denis, 75001 Paris, France

## Description

La présente invention concerne un circuit de distribution d'un fluide sous dépression pour un véhicule automobile.

On assiste à un développement constant des servomécanismes installés à bord des véhicules automobiles dont l'énergie motrice est fournie par une source de dépression, tels par exemple, les amplificateurs de freinage, les essuie-vitres, le déclencheur de mise en route du ventilateur de refroidissement, la régulation de la climatisation, la commande du changement de vitesse, etc.

On utilise comme source de dépression, soit le collecteur d'admission du moteur, soit une pompe à vide entraînée par le moteur, notamment dans le cas de moteurs diesel. De préférence, pour disposer d'une capacité suffisante, on prévoit un réservoir de dépression.

Il peut cependant se produire qu'à la suite d'une consommation particulièrement importante, le niveau de dépression dans le réservoir chute au-dessous d'un seuil tel que la mise en œuvre des appareils prioritaires, tels que l'amplificateur de freinage, ne puisse plus s'effectuer dans les conditions de sécurité requises.

Il a déjà été proposé, comme dans le brevet US 2 911 264, de prévoir deux réservoirs, l'un assurant le service normal et l'autre, assurant une provision de secours, dont la mise en service s'effectue automatiquement grâce à une valve de commutation lorsque la dépression dans le réservoir de service normal chute au-dessous d'un seuil donné.

Cet arrangement présente l'inconvénient de nécessiter deux réservoirs et la valve de commutation a une structure relativement complexe.

Le document DE-A-2114589 décrit un circuit de distribution d'un fluide sous dépression ayant les caractéristiques du préambule de la revendication 1, dans lequel la source de dépression est reliée directement, et par une seule liaison, à l'équipement à caractère prioritaire, tel que l'amplificateur de freinage. Ce dispositif présente l'inconvénient qu'une défaillance de la source de dépression entraîne une perte immédiate de l'assistance de l'amplificateur de freinage. Pour pallier ces inconvénients, la présente invention propose un circuit caractérisé en ce que le circuit comprend en outre une deuxième liaison entre la source et le dispositif à caractère prioritaire et un réservoir de dépression relié à la source d'une part et à tous les dispositifs d'utilisation d'autre part.

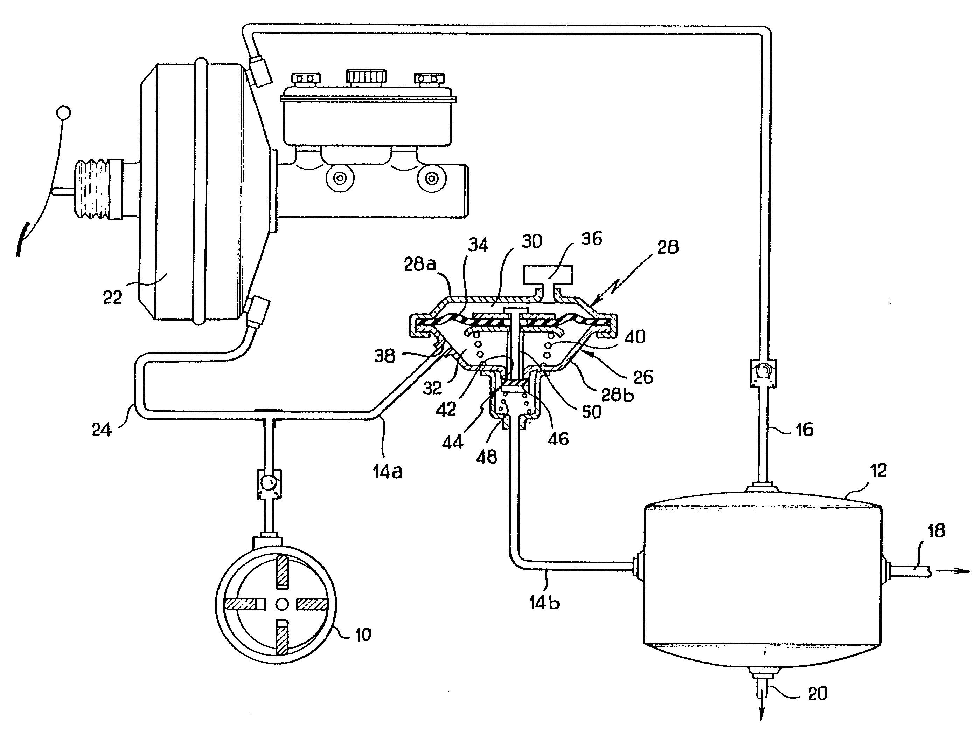

L'invention sera maintenant décrite en se référant à la figure unique des dessins qui est une représentation schématique d'un circuit de freinage selon l'invention.

Ce circuit est raccordé à une source de dépression, représentée à titre d'exemple par une pompe à vide 10, entraînée par le moteur du véhicule. Il comprend un réservoir 12 relié à la source par des conduits 14a, 14b et à divers dispositifs d'utilisation par des conduits 16, 18, 20.

Dans l'exemple choisi, le dispositif d'utilisation desservi par le conduit 16 consiste en un servomoteur d'assistance au freinage 22 qui a un caractère prioritaire tandis que les dispositifs d'utilisation (non représentés) desservis par les conduits 18 et 20 n'ont pas de caractère prioritaire.

Le servomoteur est également relié directement à la source 10 via un conduit 24 et une valve de priorité 26 est montée sur le conduit 14a-14b qui alimente le réservoir.

La valve de priorité a été représentée en coupe et est constituée comme suit :

deux coquilles 28a et 28b définissent un boîtier 28, divisé en deux chambres 30 et 32 par un diaphragme 34, la chambre 30 étant reliée à l'atmosphère via un orifice 36 et la chambre 32 étant reliée à la source de dépression 10 via un orifice 38. Un ressort 40 repousse le diaphragme 34 vers la chambre atmosphérique 30.

La coquille 28b comprend un orifice central 42 dont le pourtour définit un siège pour une valve 44. A l'extérieur de la coquille 28b et au départ du conduit 14b qui dessert le réservoir, est monté un opercule de valve 46 sollicité par un ressort 48 en direction du siège.

Enfin, le diaphragme 34 porte une tige de commande 50 qui se projette en direction de l'opercule 46 en traversant l'orifice 42, tout en permettant un libre écoulement entre la tige et l'orifice.

En fonctionnement, le système se comporte de la manière suivante : à la mise en route de la pompe à vide 10, les conduits 14a, 24, le servomoteur 22 et la chambre 32 sont progressivement mis sous dépression. Lorsque cette dépression dépasse un seuil prédéterminé, le diaphragme 34 se déplace à l'encontre du ressort 40 en direction de la chambre 32, la tige 50 dégageant l'opercule 46 de son siège, ce qui assure alors la mise sous dépression du réservoir 12 puis des conduits 16, 18, 20 et des dispositifs utilisateurs.

L'ensemble du circuit et des dispositifs desservis est alors opérationnel, étant observé que le servomoteur d'assistance au freinage 22 était déjà opérationnel peu après la mise en route de la pompe à vide.

Il peut se produire, en cours de fonctionnement, que la consommation des divers dispositifs utilisateurs entraîne une chute de dépression importante dans le réservoir 12 et que le servomoteur d'assistance au freinage 22, qui a un caractère prioritaire pour des raisons évidentes de sécurité, ne puisse plus fonctionner de manière satisfaisante.

Dans cette situation, la dépression régnant dans la chambre 32 chute au-dessous du seuil prédéterminé et le diaphragme 34 est repoussé par le ressort 40 vers la chambre atmosphérique 30. Le retrait de la tige 50 qui en résulte provoque la fermeture de l'opercule 46 sur son siège et l'isolement du réservoir 12. La pompe à vide dessert alors uniquement le servomoteur 22 qui peut alors continuer à fonctionner de manière satisfaisante.

De plus, le niveau de dépression est maintenu en toutes circonstances au moins égal au seuil prédéterminé.

On notera enfin que la valve de priorité assure également la sécurité de fonctionnement du servomoteur 22 en cas de fuite importante dans les conduits desservant les autres dispositifs utilisateurs par exemple lors d'une rupture.

**Revendications**

1. Circuit de distribution d'un fluide sous dépression comprenant une source de dépression (10) reliée à au moins un dispositif d'utilisation (22) présentant un caractère prioritaire et à au moins un dispositif d'utilisation (18, 20) présentant un caractère secondaire (18, 20), une valve de priorité (26) dans la liaison (14a, 14b) entre la source (10) et le dispositif à caractère secondaire et sensible à la dépression disponible à la source (10) pour interrompre ladite liaison (14a, 14b) lorsque la dépression disponible est inférieure à un seuil prédéterminé, caractérisé en ce que le circuit comprend en outre une deuxième liaison (16) entre la source (10) et le dispositif à caractère prioritaire (22) et un réservoir de dépression (12) relié à la source (10) d'une part et à tous les dispositifs d'utilisation (22, 18, 20) d'autre part.

2. Circuit de distribution selon la revendication 1 caractérisé en ce que ladite valve de priorité (26) comporte un boîtier (28) divisé en deux chambres (30, 32) par un diaphragme (34) l'une des chambres (30) étant reliée à l'atmosphère et l'autre (32) à la source de dépression (10), ledit diaphragme (34) étant sollicité élastiquement vers ladite chambre (30) reliée à l'atmosphère et portant une tige (50) coopérant avec une valve (44) située entre ladite chambre (32) reliée à la source de dépression et ledit réservoir (12).

3. Circuit de distribution selon la revendication 2 caractérisé en ce que ledit boîtier (28) comporte un orifice (42) en communication avec ladite chambre (32) et dont le pourtour constitue un siège de valve, un opercule de valve (46), situé du côté dudit réservoir (12) étant sollicité élastiquement en direction dudit siège et ladite tige (50) se projetant au travers dudit orifice (42) en direction dudit opercule de valve (46).

**Claims**

1. A circuit for distributing a fluid under subatmospheric pressure comprising a subatmospheric pressure source (10) connected to at least one primary consuming device (22) and at least one secondary consuming device (18, 22), a primary valve (26) in said connection (14a, 14b) between the source (10) and the secondary device and responsive to the subatmospheric pressure available at the source (10) to interrupt said connection (14a, 14b) when the available subatmospheric pressure is below a predetermined level, characterized in that the circuit further comprises a second connection (16) between the source (10) and the primary device (22) and a subatmospheric pressure reservoir (12) connected to the source (10) on the one hand and to all of the consuming devices (22, 18, 20) on the other hand.

2. The distributor circuit according to claim 1, characterized in that said primary valve (26) comprises a casing (28) divided into two chambers (30, 32) by a diaphragm (34), one of the chambers (30) being connected to the atmosphere and the other (32) to the subatmospheric pressure source (10), said diaphragm (34) being resiliently biassed towards said chamber (30) connected to the atmosphere and supporting a rod (50) cooperating with a valve (44) situated between said chamber (32) connected to the subatmospheric pressure source and said reservoir (12).

3. The distributor circuit according to claim 2, characterized in that said casing (28) comprises an orifice (42) which is in communication with said chamber (32) and the circumference of which forms a valve seat, a valve member (46) situated adjacent said reservoir (12) being resiliently biassed towards said seat and said rod (50) projecting across said orifice (42) towards said valve member (46).

**Patentansprüche**

1. Verteilerkreis für ein Unterdruckmedium mit einer Unterdruckquelle (10), die an mindestens einem Primärverbraucher (22) und mindestens einem Sekundärverbraucher (18, 20) angeschlossen ist, einem Primärventil (26) in der Verbindung (14a, 14b) zwischen der Unterdruckquelle (10) und dem Sekundärverbraucher, das auf den an der Unterdruckquelle (10) zur Verfügung stehenden Unterdruck anspricht, um die Verbindung (14a, 14b) zu unterbrechen, wenn der zur Verfügung stehende Unterdruck kleiner ist als eine vorgegebene Schwelle, dadurch gekennzeichnet, daß der Kreis außerdem eine zweite Verbindung (16) zwischen der Unterdruckquelle (10) und dem Primärverbraucher (22) sowie ein Unterdruckreservoir (12) aufweist, das einerseits an der Unterdruckquelle (10) und andererseits an sämtlichen Verbrauchern (22, 18, 20) angeschlossen ist.

2. Verteilerkreis nach Anspruch 1, dadurch gekennzeichnet, daß das Primärventil (26) ein Gehäuse (28) aufweist, das von einer Membran (34) in zwei Kammern (30, 32) unterteilt wird, wobei eine der Kammern (30) mit der Atmosphäre und die andere (32) mit der Unterdruckquelle (10) verbunden ist und die Membran (34) elastisch gegen die mit der Atmosphäre verbundene Kammer (30) vorgespannt ist und eine Stange (50) trägt, die mit einem Ventil (44) zusammenwirkt, das zwischen der mit der Unterdruckquelle verbundenen Kammer (32) und dem Reservoir (12) angeordnet ist.

3. Verteilerkreis nach Anspruch 2, dadurch gekennzeichnet, daß das Gehäuse (28) eine Öffnung (42) aufweist, die mit der besagten Kammer (32) in Verbindung steht und deren Umfang einen Ventilsitz bildet, wobei ein auf der Seite des Reservoirs (12) angeordneter Ventilkörper (46) in Richtung auf den Ventilsitz elastisch vorgespannt ist und die Stange (50) durch die Öffnung (42) hindurch in Richtung auf den Ventilkörper (46) vorsteht.